# EUROPEAN PATENT SPECIFICATION

(11) **EP 2 077 403 B1**
(45) Date of publication and mention of the grant of the patent: **07.03.2012**
(21) Application number: 08150021.7
(22) Date of filing: 03.01.2008
(51) Int. Cl.: F16G 13/16

(54) **Energy guiding chain having low noise and good durability**
Geräuscharme Energieführungskette mit einer hohen Lebensdauer
Chaîne de transport d'énergie silencieuse et ayant une bonne durabilité

(43) Date of publication of application: 08.07.2009
(73) Proprietor: Hanshin Chain Co., Shiheung-Shi Gyunggi-Do (KR)
(72) Inventor: Kim, Dujin, Seoul (KR)
(74) Representative: Vossius & Partner

(56) References cited:
- DE-U1- 9 409 082
- DE-U1- 20 107 003
- DE-U1-202006 009 482
- US-A1- 2007 163 795
- DATABASE WPI Week 200765 Derwent Publications Ltd., London, GB; AN 2007-697088 XP002483744 & KR 100 661 773 B1 (KIM D J) 28 December 2006 (2006-12-28)
- DATABASE WPI Week 200708 Derwent Publications Ltd., London, GB; AN 2007-080620 XP002483745 & KR 100 591 274 B1 (KIM D J) 19 June 2006 (2006-06-19)

## Description

### BACKGROUND OF THE INVENTION

### Field of the Invention

The present invention relates to a robo chain, and more particularly to a coupling structure of link plates of a robo chain capable of improving a clamping force between neighboring link plates of the robo chain and preventing a clamping member from being separated from the link plates due to an operation of the robo chain.

### Description of the Related Art

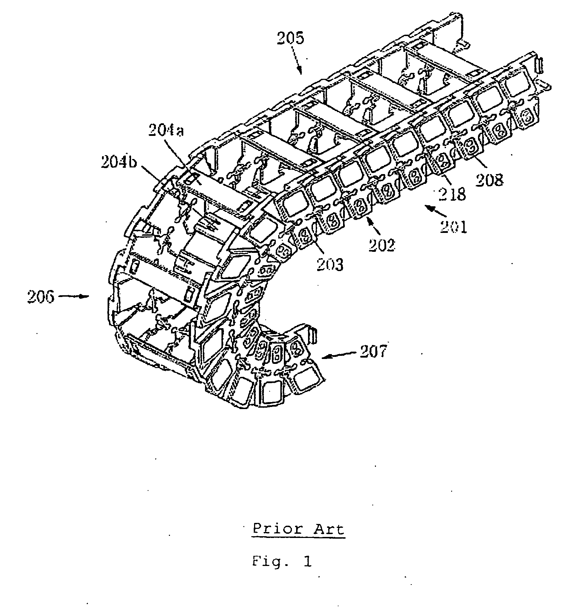

As a conventional well-known technology, as shown in FIG. 1, there is an energy guiding chain 201 for guiding a hose, a cable or the like. In the energy guiding chain 201, neighboring chain links 202 are connected to each other in a segmented manner. The chain links 202 have straps 203 facing each other. The straps 203 have inner and outer side surfaces and small surfaces substantially parallel to a longitudinal direction of the chain 201 and perpendicular to the side surfaces. Some chain links 202 have one or more cross members 204a and 204b connecting the straps 203. Segmented joints installed at grooves 218 between the neighboring chain links 202 are disposed between the small surfaces of the straps 203. In the energy guiding chain 201 capable of moving while forming a lower strand 205, a bent area 206 and an upper strand 207, the segmented joints are configured as joint elements 208 which are separately provided to be elastically deformable in a bending direction of the chain 201. The joint elements 208 are at least partially extended between the inner and outer side surfaces of the straps 203.

However, in the conventional technology, see for example KR 100661773, the joint elements, which are installed at the grooves passing through the inner and outer side surfaces of the chain links, may be taken out from the inner and outer side surfaces of the chain links during the movement when the chain is used for a long period of time. If the joint elements fall into an inner area of the chain links in which a hose or cable is disposed, there is no direct influence on the production of products. However, if the joint elements fall into an outer area of the chain links, it may cause damage of the products under production, thereby generating the defects of the products. When the chain links clamped with the joint elements are transformed at a linear portion and a bent area, since the joint elements are not completely closely contacted to coupling grooves of the chain links, it may generate noise. When the chain is used for a long period of time and the joint elements fall into the inner area of the chain links during the movement, it may have an influence on a device such as a hose or cable mounted in the chain links, thereby generating the defects in the operation of the robo chain. Further, when the width of the chain links with the cross members provided at opposite ends is intended to be reduced, it is necessary to manufacture new cross members having a length corresponding to the reduced width.

### SUMMARY OF THE INVENTION

Therefore, the present invention has been made in view of the above problems, and it is an object of the present invention to provide a robo chain capable of improving a clamping force between neighboring link plates of the robo chain and preventing a clamping member from being separated from the link plates due to the operation of the robo chain, wherein front and rear end coupling portions of the neighboring link plates are engaged with each other and a connecting rod is inserted into through holes formed from the front end coupling portions to the rear end coupling portions to couple a number of link plates, thereby enhancing a clamping force:

In accordance with an aspect of the present invention, there is provided a robo chain according to claim 1.

Preferably, a first projection and a second projection mounting groove are formed at an upper end of the front end coupling portion of the link plate and a first anti-separation projection and a second anti-separation projection mounting groove are formed at a lower end of the front end coupling portion. Further, a first projection mounting groove and a second projection, respectively corresponding to the first projection and the second projection mounting groove disposed at the upper end of the front end coupling portion of the neighboring link plate, are formed at an upper end of the rear end coupling portion, and a first anti-separation projection mounting groove and a second anti-separation projection, respectively corresponding to the first anti-separation projection and the second anti-separation projection mounting groove disposed at the lower end of the front end coupling portion of the neighboring link plate, are formed at a lower end of the rear end coupling portion.

Preferably, the link plates are installed such that the inner surface portions thereof face each other, and protruding parts formed on the connecting bar mounting members are inserted into second through holes of the connecting bars such that a length of the connecting bars can be adjusted when reducing a width between the link plates facing each other.

As described above, in the coupling structure of the link plates according to the present invention, a clamping force between the neighboring link plates is improved to provide a robo chain having a low noise and good durability. Further, the connecting rod is inserted into the through holes formed from the front end coupling portions to the rear end coupling portions of the link plates to couple a number of link plates. Accordingly, it is possible to increase a clamping force between the neighboring link plates of the robo chain. Also, it is possible to prevent a clamping member from being separated from the link plates due to the operation of the robo chain.

### BRIEF DESCRIPTION OF THE DRAWINGS

The above and other objects, features and other advantages of the present invention will be more clearly understood from the following detailed description taken in conjunction with the accompanying drawings, in which:
FIG. 1 shows a perspective view of an energy guiding chain according to the prior art;
FIG. 2 illustrates a perspective view of a robo chain having a low noise and durability due to an increase in a clamping force according to the present invention;
FIG. 3 illustrates a plan view of the robo chain having a low noise and durability due to an increase in a clamping force according to the present invention;
FIGS. 4A and 4B illustrate an inner surface portion and an outer surface portion of link plates according to the present invention, respectively;
FIG. 5 illustrates an exploded view showing the link plates and a connecting rod according to the present invention;
FIG. 6 illustrates a coupling relationship between the link plates and the connecting rod according to the present invention;
FIG. 7 illustrates a coupling relationship between the link plates and connecting bars according to the present invention; and
FIGS. 8A and 8B illustrate the robo chain in which the link plates are coupled with the connecting rod.

### DETAILED DESCRIPTION OF THE PREFERRED EMBODIMENTS

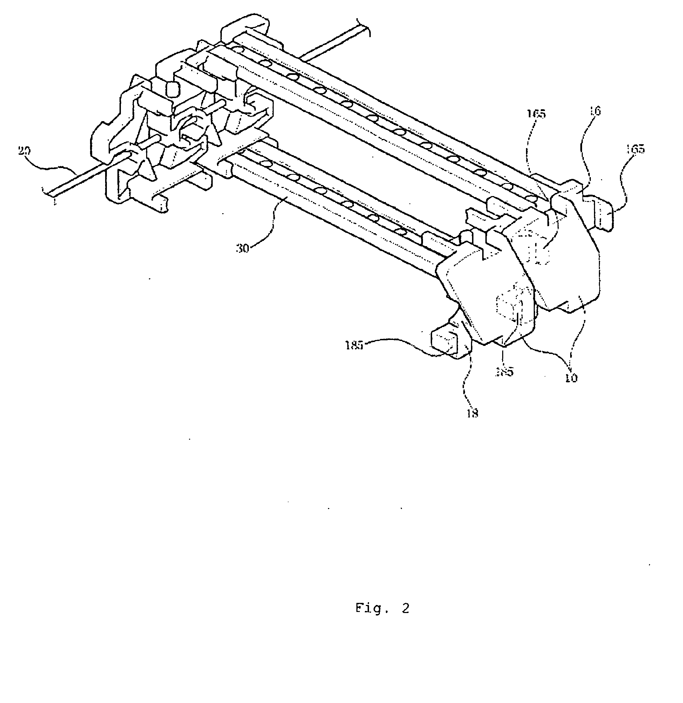

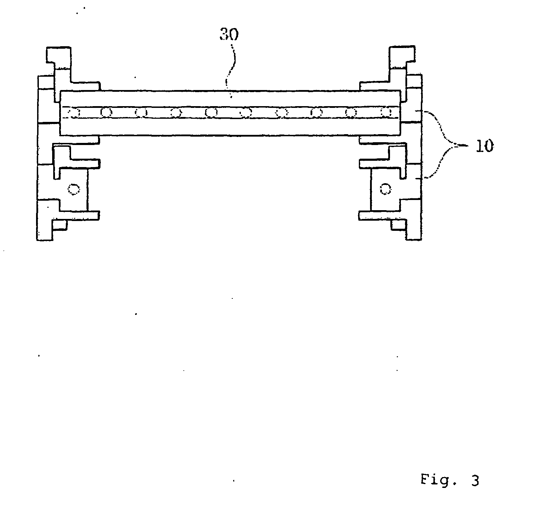

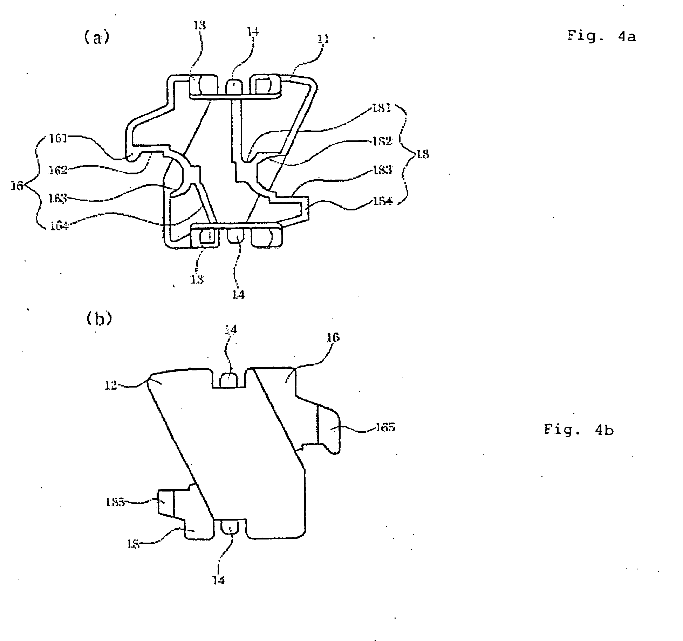

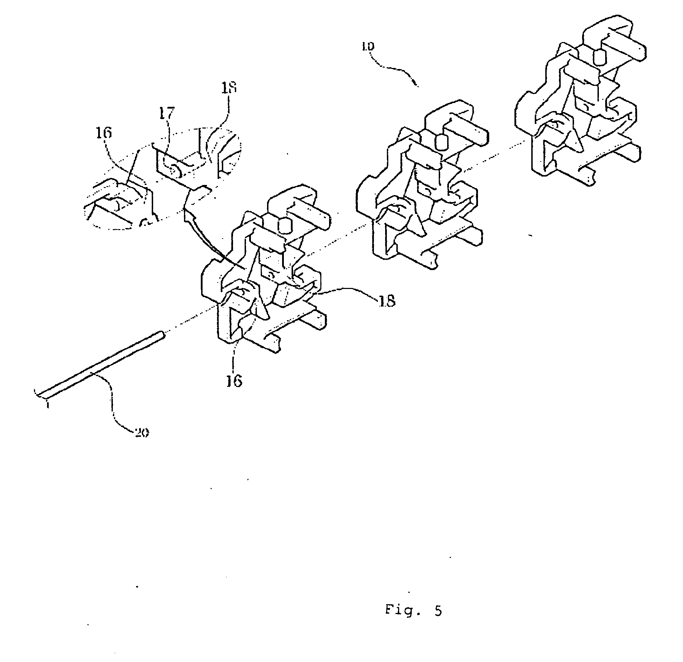

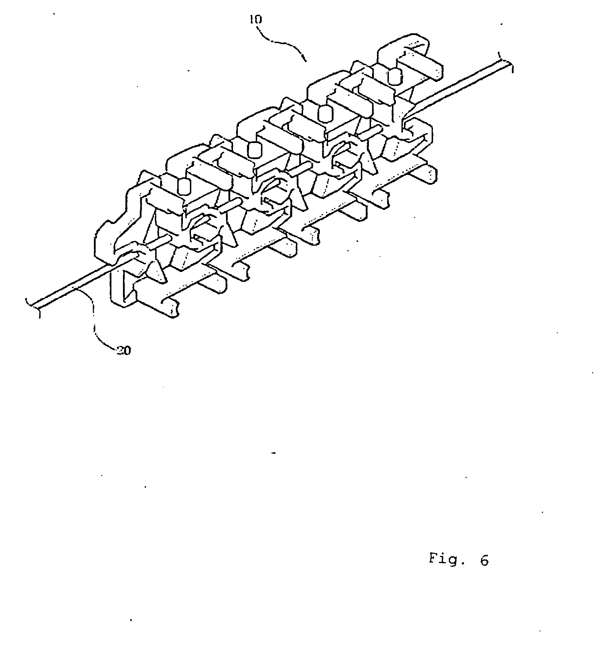

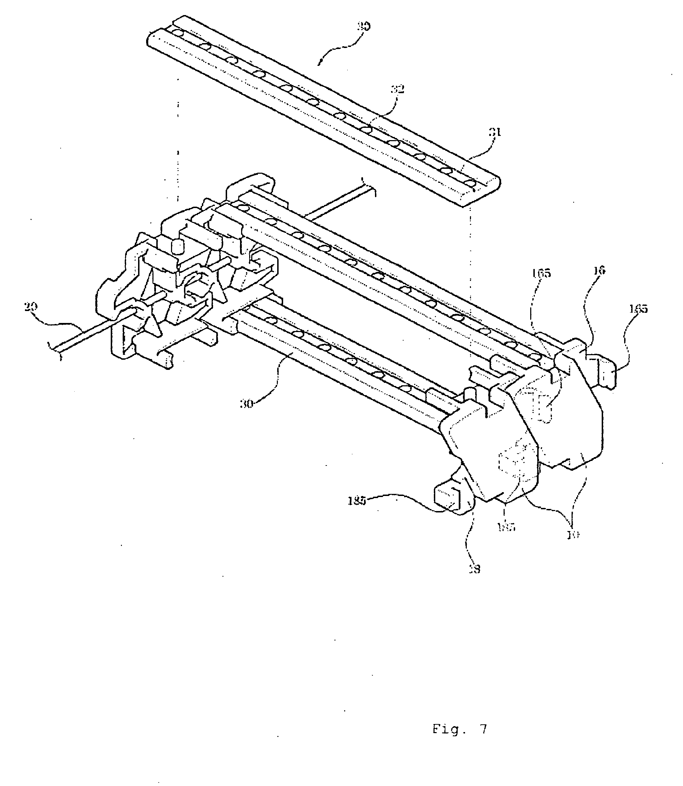

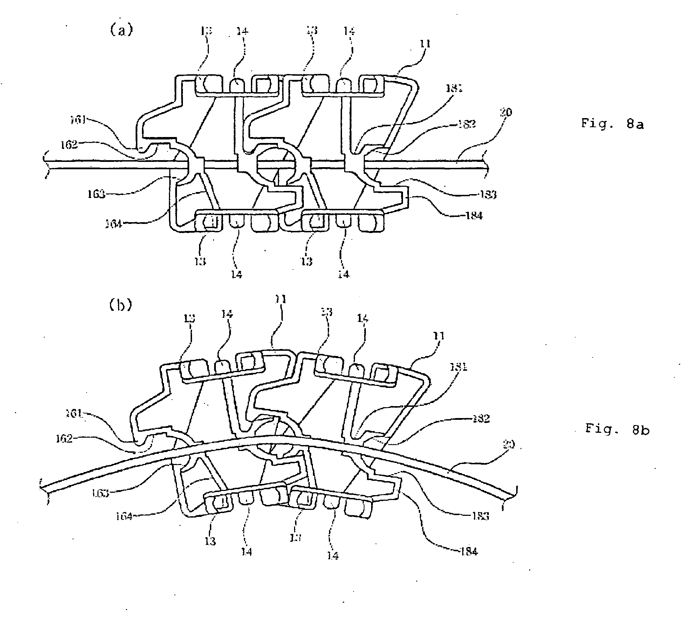

FIG. 2 illustrates a perspective view of a robo chain having a low noise and durability due to an increase in a clamping force according to the present invention. FIG. 3 illustrates a plan view of the robo chain having a low noise and durability due to an increase in a clamping force according to the present invention. FIGS. 4A and 4B illustrate an inner surface portion and an outer surface portion of link plates according to the present invention, respectively. FIG. 5 illustrates a perspective view of the link plates according to the present invention. FIG. 6 illustrates a coupling relationship between the link plates and a connecting rod according to the present invention. FIG. 7 illustrates a coupling relationship between the link plates and connecting bars according to the present invention. FIGS. 8A and 8B illustrate the robo chain in which the link plates are coupled with the connecting rod.

Hereinafter, components will be described with reference to accompanying drawings.

FIGS. 2 and 3 illustrate a perspective view and a plan view of a robo chain coupled with link plates 10, a connecting rod 20 and connecting bars 30 according to the present invention, respectively. The link plates 10 are installed such that inner surfaces of the link plates 10 face each other by coupling the connecting bars 30 to upper and lower ends of the link plates 10. The neighboring link plates 10 are clamped and fixed to each other by the connecting rod 20.

As shown in FIGS. 4A and 4B, each of the link plates 10 includes an open type inner surface portion 11 and a sealed type outer surface portion 12. In the inner surface portion 11 shown in FIG. 4A, connecting bar mounting members 13 provided with protruding parts 14 are disposed at upper and lower ends of the inner surface portion 11, and a front end coupling portion 16 and a rear end coupling portion 18 are disposed at left and right ends of the inner surface portion 11. A first projection 161 and a second projection mounting groove 162 are formed at an upper end of the front end coupling portion 16. A first anti-separation projection 163 and a second anti-separation projection mounting groove 164 are formed at a lower end of the front end coupling portion 16. A first projection mounting groove 181 and a second projection 182, respectively corresponding to the first projection 161 and the second projection mounting groove 162 disposed at the upper end of the front end coupling portion of the neighboring link plate, are formed at an upper end of the rear end coupling portion 18. A first anti-separation projection mounting groove 183 and a second anti-separation projection 184, respectively corresponding to the first anti-separation projection 163 and the second anti-separation projection mounting groove 164 disposed at the lower end of the front end coupling portion of the neighboring link plate, are formed at a lower end of the rear end coupling portion 18.

FIGS. 5 and 6 illustrate an exploded view and a perspective view showing a coupling structure of the link plates of the robo chain according to the present invention. The robo chain includes the link plates 10, each having the open type inner surface portion 11 and the sealed type outer surface portion 12, wherein the front end coupling portion 16 and the rear end coupling portion 1'8 are formed on the inner surface portion 11.

First through holes 17 are formed on the link plates 10 from the inside of the front end coupling portion 16 to the inside of the rear end coupling portion 18. The front end coupling portion 16 of the link plate 10 is safely mounted on the rear end coupling portion 18 of the neighboring link plate 10 such that the first through holes 17 thereof correspond to each other.

In a state where the first through holes 17 of the neighboring link plates 10 correspond to each other, the connecting rod 20 is inserted into the first through holes 17, thereby coupling the link plates 10. According to a work environment, a number of the link plates 10 are coupled to each other by inserting the connecting rod 20 into the first through holes 17 in a longitudinal direction.

The connecting rod 20 may be formed of a material selected from a group consisting of a steel wire, a stainless steel wire and a high elasticity engineering plastic wire, which has excellent strength and elasticity, impact resistance, abrasion resistance and heat resistance.

As described above, the robo chain, wherein the first through holes 17 are formed on the front end coupling portions 16 and the rear end coupling portions 18 of the link plates 10 and the connecting rod 20 is inserted into the first through holes 17 to clamp the link plates 10, prevents the failure of products due to damage of a hose, a cable or the like, which is generated when a clamping member is taken out during the movement.

FIG. 7 illustrates a coupling relationship between the link plates 10 and the connecting bars 30. Each of the connecting bars 30 includes a number of second through holes 32 formed in a longitudinal direction such that the protruding parts 14 formed on the connecting bar-mounting members 13 can be inserted into the second through holes 32. A groove 31 is formed on each of the connecting bars 30 in a longitudinal direction along the second through holes 32, thereby easily detaching/attaching the protruding parts 14 from/to the second through holes 32. Since the second through holes 32 are formed in a longitudinal direction, when reducing a width between the link plates 10 with the inner surface portions 11 facing each other, it is possible to reuse the pre-installed connecting bars 30 by cutting them without manufacturing new connecting bars to having a length corresponding to the reduced width.

FIGS. 8A and 8B illustrate the robo chain in which the link plates 10 are coupled with the connecting rod. FIG. 8A illustrates a state of the link plates 10 at a linear portion. FIG. 8B illustrates a state of the link plates 10 at a bent portion. In the neighboring link plates 10 shown in FIG. 8A, the front end coupling portion 16 and the rear end coupling portion 18 are coupled to each other by the connecting rod 20. After the rear end coupling portion 18 of the link plate 10 is safely mounted with the front end coupling portion 16 of the neighboring link plate 10 such that the first through holes 17 thereof correspond to each other, the connecting rod 20 is inserted to pass through the first through hole of the rear end coupling portion and the first through hole of the front end coupling portion of the neighboring link plate, thereby coupling the plural link plates 10. In this case, the first projection 161 of the front end coupling portion 16 of the link plate is engaged with the end of the first projection mounting groove 181 of the neighboring rear end coupling portion. The first anti-separation projection 163 of the front end coupling portion is engaged with the first anti-separation projection mounting groove 183 of the neighboring rear end coupling portion. The second projection mounting groove 162 of the front end coupling portion is engaged with the second projection 182 of the neighboring rear end coupling portion. The second anti-separation projection mounting groove 164 of the front end coupling portion is engaged with the second anti-separation projection 184 of the neighboring rear end coupling portion. Thus, in a transfer operation of the robo chain, the link plates 10 having a locking structure can suppress the generation of noise and provide a buffering effect due to load dispersion.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A robo chain, which is used in high-speed equipment to protect a cable, comprising:
link plates (10), each having an inner surface portion (11) comprising protrusions and an outer surface portion (12), wherein the link plates are installed such that the inner surface portions face each other, wherein connecting bar mounting members (13) are disposed at upper and lower sides of the inner surface portion (11), the protrusions comprise a front end coupling portion (16) disposed at a left side of the inner surface portion and a rear end coupling portion(18) disposed at a right side of the inner surface portion (11), and one hole (17) is formed at centers of the front and rear end coupling portions to couple the neighboring link plates;
a connection rod (20) which is inserted to pass through one hole (17) of the rear end coupling portion (18) and the front end coupling portion(16) of the neighboring link plate after the rear end coupling portion (18) of the link plate (10) is mounted on the front end coupling portion (16) of the neighboring link plate; and connecting bars (30) coupled to the connecting bar mounting members (13) of the link plates (10); wherein the connection rod (20) is formed of a material selected from a group consisting of a steel wire, a stainless steel wire and a high elasticity engineering plastic wire, **characterized in that**, the space between the front end coupling portion and the rear end coupling portion is void, except for the rod that passes through it.

2. A robo chain according to claim 1, wherein a first projection (161), a second projection mounting groove (162), a first anti-separation projection (163) and a second anti-separation projection mounting groove (164) are formed at the front end coupling portion (16), of the inner surface portion (11), and
wherein a first projection mounting groove (181) and a second projection (182), respectively matching to the first projection(161) and the second projection mounting groove (162) disposed at the upper end of the front end coupling portion of the neighboring link plate, are formed at an upper end of the rear end coupling portion (18), and a first anti-separation projection mounting groove (183) and a second anti-separation projection (184), respectively matching to the first anti-separation projection (163) and the second anti-separation projection mounting groove (164) disposed at the front end coupling portion (16) of the neighboring link plate, are formed at the rear end coupling potion (18).

## Patentansprüche

1. Handhabungskette, die in einer Hochgeschwindigkeitsanlage verwendet wird, um ein Kabel zu schützen, die aufweist:
Kettenlaschen (10) mit jeweils einem Innenflächenabschnitt (11), der Vorsprünge aufweist, und einem Außenflächenabschnitt (12), wobei die Kettenlaschen so angebracht sind, dass die Innenflächenabschnitte einander gegenüberliegen, wobei Verbindungsstabbefestigungselemente (13) an Ober- und Unterseiten des Innenflächenabschnitts (11) angeordnet sind, die Vorsprünge einen vorderen Endkopplungsabschnitt (16), der auf der linken Seite des Innenflächenabschnitts angeordnet ist, und einen hinteren Endkopplungsabschnitt (18) aufweisen, der auf einer rechten Seite des Innenflächenabschnitts (11) angeordnet ist, und ein Loch (17) in der Mitte des vorderen und hinteren Endkopplungsabschnitts ausgebildet ist, um die benachbarten Kettenlaschen zu koppeln;
eine Verbindungsstange (20), die so eingesetzt ist, dass sie durch ein Loch (17) des hinteren Endkopplungsabschnitts (18) und des vorderen Endkopplungsabschnitts (16) der benachbarten Kettenlasche geht, nachdem der hintere Endkopplungsabschnitt (18) der Kettenlasche (10) am vorderen Endkopplungsabschnitt (16) der benachbarten Kettenlasche angebracht ist; und
Verbindungsstäbe (30), die mit den Verbindungsstabbefestigungselementen (13) der Kettenlaschen (10) gekoppelt sind; wobei die Verbindungsstange (20) aus einem Material ausgebildet ist, das aus einer Gruppe ausgewählt ist, die aus einem Stahldraht, einem Edelstahldraht und einem hochelastischen technischen Kunststoffdraht besteht,
**dadurch gekennzeichnet, dass** der Raum zwischen dem vorderen Endkopplungsabschnitt und dem hinteren Endkopplungsabschnitt mit Ausnahme der Stange, die durch ihn geht, leer ist.

2. Handhabungskette nach Anspruch 1, wobei ein erster Vorsprung (161), eine zweite Vorsprungbefestigungsnut (162), ein erster Trennverhinderungsvorsprung (163) und eine zweite Trennverhinderungsvorsprungsbefestigungsnut (164) am vorderen Endkopplungsabschnitt (16) des Innenflächenabschnitts (11) ausgebildet sind, und
wobei eine erste Vorsprungbefestigungsnut (181) und ein zweiter Vorsprung (182), die jeweils zum ersten Vorsprung (161) und zur zweiten Vorsprungbefestigungsnut (162) passen, die am oberen Ende des vorderen Endkopplungsabschnitts der benachbarten Kettenlasche angeordnet sind, an einem oberen Ende des hinteren Endkopplungsabschnitts (18) ausgebildet sind, und eine erste Trennverhinderungsvorsprungbefestigungsnut (183) und ein zweiter Trennverhinderungsvorsprung (184), die jeweils zum ersten Trennverhinderungsvorsprung (163) und zur zweiten Trennverhinderungsvorsprungbefestigungsnut (164) passen, die am vorderen Endkopplungsabschnitt (16) der benachbarten Kettenlasche angeordnet sind, am hinteren Endkopplungsabschnitt (18) ausgebildet sind.

## Revendications

1. Chaîne robotique, utilisée dans un équipement à haute vitesse pour protéger un câble, comprenant :
des plaques de liaison (10), ayant chacune une partie de surface intérieure (11) avec des saillies et une partie de surface extérieure (12), les plaques de liaison étant montées de telle manière que les parties de surface intérieure sont opposées l'une à l'autre, des éléments d'assemblage à barres de raccordement (13) étant disposés sur les côtés supérieur et inférieur de la partie de surface intérieure (11), les saillies comprenant une partie d'accouplement avant (16) disposée sur le côté gauche de la partie de surface intérieure et une partie d'accouplement arrière (18) disposée sur le côté droit de la partie de surface intérieure (11), et un trou (17) étant ménagé au centre des parties d'accouplement avant et arrière pour l'accouplement de plaques de liaison voisines ;
une tige de raccordement (20) étant insérée de manière à traverser le trou (17) de la partie d'accouplement arrière (18) et de la partie d'accouplement avant (16) de la plaque de liaison voisine après montage de la partie d'accouplement arrière (18) de la plaque de liaison (10) sur la partie d'accouplement avant (16) de la plaque de liaison voisine ; et des barres de raccordement (30) étant accouplées aux éléments d'assemblage à barres de raccordement (13) des plaques de liaison (10) ; la tige de raccordement (20) étant constituée d'un matériau sélectionné dans un groupe comprenant un fil d'acier, un fil d'acier inoxydable et un fil plastique d'élasticité élevée pour constructions mécaniques,
**caractérisée en ce que** l'espace entre la partie d'accouplement avant et la partie d'accouplement arrière est vide, à l'exception de la tige qui le traverse.

2. Chaîne robotique selon la revendication 1, où une première saillie (161), une rainure de montage (162) de la deuxième saillie, une première saillie anti-séparation (163) et une rainure de montage (164) de la deuxième saillie anti-séparation sont formées sur la partie d'accouplement avant (16) de la partie de surface intérieure (11), et où une rainure de montage (181) de la première saillie et une deuxième saillie (182), correspondant respectivement à la première saillie (161) et à la rainure de montage (162) de la deuxième saillie disposées à l'extrémité supérieure de la partie d'accouplement avant de la plaque de liaison voisine, sont formées à une extrémité supérieure de la partie d'accouplement arrière (18), et une rainure de montage (183) de la première saillie anti-séparation et une deuxième saillie anti-séparation (184), correspondant respectivement à la première saillie anti-séparation (163) et à la rainure de montage (164) de la deuxième saillie anti-séparation disposées sur la partie d'accouplement avant (16) de la plaque de liaison voisine, sont formées sur la partie d'accouplement arrière (18).
